# EUROPEAN PATENT SPECIFICATION

(11) **EP 0 896 461 B1**
(45) Date of publication and mention of the grant of the patent: **21.11.2001**
(21) Application number: 97401821.0
(22) Date of filing: 29.07.1997
(51) Int. Cl.: H04M 1/00, H04M 3/22

(54) **Telecommunication device with an incoming call detector**
Telekommunikationsgerät mit Detektor zur Erkennung eines ankommenden Gespräches
Dispositif de télécommunication avec un détecteur d'un appel entrant

(43) Date of publication of application: 10.02.1999
(73) Proprietor: ALCATEL, 75008 Paris (FR)
(72) Inventor: Toularastel, Christophe Alcatel Business Systems, 67408 Illkirch Cedex (FR); Francis Domain Alcatel Business Systems, 67408 Illkirch Cedex (FR)
(74) Representative: Knecht, Ulrich Karl, Dipl.-Ing.

(56) References cited:
- DE-A- 3 741 072
- GB-A- 2 158 677

## Description

The invention relates to a telecommunication device comprising
- an input for receiving a ringing signal,
- a detector coupled to said input for detecting said ringing signal and comprising a rectifier and a supplyless memory for storing a memory signal in response to said ringing signal for being able to distinguish between incoming calls and outgoing calls.

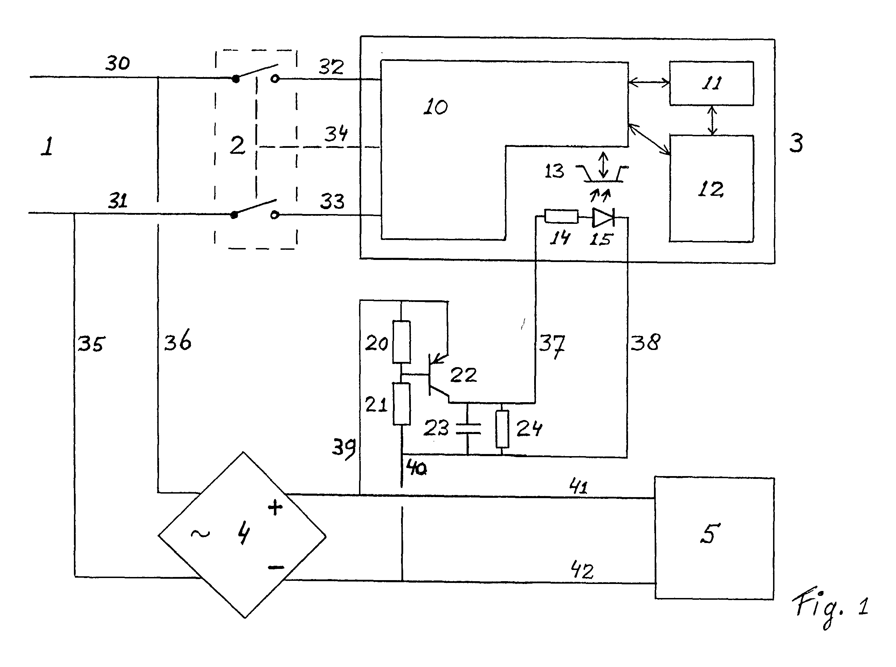

Such a telecommunication device, like for example an analog telephone, is known from DE 3741072, which discloses a telephone apparatus, in particular a public cointelephone. This public cointelephone comprises said input (see figure 2: AL) and comprises said detector comprising said rectifier (see figure 2: diode D1) and comprising said supplyless memory (see figure 2: combination C1+R2).

Two kinds of telecommunication devices can be distinguished: a first kind having no power supply apart from signals arriving via said telecommunication line, and a second kind having a separate power supply via for example a battery or electric mains. In case of a telecommunication device having no separate power supply, it gets its power supply via said telecommunication line after the mouthpiece has been lifted. Before said mouthpiece has been lifted, it can use the rectified ringing signal as a power supply.

A telecommunication device having no separate power supply therefore needs said detector comprising said rectifier and said supplyless memory to be able to distinguish between incoming calls and outgoing calls.

A telecommunication device like that illustrated in the afore mentioned document is disadvantageous, inter alia, due to needing a Schmitt Trigger (see figure 2: ST) between opto-coupler and processor.

It is an object of the invention, inter alia, to provide a telecommunication device as described in the preamble with a display without needing such a Schmitt Trigger between opto-coupler and processor.

Thereto, the telecommunication device according to the invention is characterised in that said telecommunication device comprises
- a display for displaying information with respect to said incoming calls as well as said outgoing calls,
   and in that said detector comprises
- a switch located between said rectifier and said supplyless memory.

Due to using said switch, said supplyless memory is charged by the rectified ringing signal only, and is no longer charged by noise signals which may appear independently of said ringing signal being present or not. As a consequence, said complex and expensive Schnitt Trigger as disclosed in DE 3741072 can be avoided.

Said memory being supplyless indicates that it does not need to be connected to for example a battery or electric mains for being able to keep a signal stored. Such a memory for example comprises a relais which for example in response to the presence of power is switched from a first position to a second position and then remains that second position even when the power has gone, and which for example in response to said power again being present is switched from the second position to the first position and then remains in that first position even when the power has gone, etc.

The invention is based on the insight, inter alia, that said supplyless memory should not be charged with noise signals.

The invention solves the problem, inter alia, of providing a supplyless telecommunication device with a display without needing a Schmitt Trigger between opto-coupler and processor.

A first embodiment of the telecommunication device according to the invention is characterised in that said ringing signal comprises a first signal during a first time-interval and a second signal during a second time-interval, said memory signal being generated during at least a part of said first time-interval, and at least a part of said memory signal remaining present during said second time-interval. interval, and therefore said capacitor will not be discharged completely during the ringing signal.

A seventh embodiment of the telecommunication device according to the invention is characterised in that said detector comprises a switch coupled to said capacitor for creating a charging time-interval being different from a discharging time-interval.

Such a switch like for example a transistor being in a conductive state during said first time-interval and being in a non-conductive state during said second time-interval allows said capacitor being charged fastly and being discharged slowly, for example.

A eight embodiment of the telecommunication device according to the invention is characterised in that said detector comprises a threshold circuit coupled to said capacitor for detecting said capacitor being charged more or less than a predefined threshold.

In combination with such a threshold circuit the capacitor (possibly together with the resistor) becomes a so-called one-bit memory, in which either a signal is present (having an amplitude larger than the threshold) or not (having an amplitude smaller than the threshold).

The invention will be explained in greater detail at the hand of an embodiment disclosed in the drawing, whereby
figure 1 discloses a telecommunication device according to the invention comprising a supplyless memory in the form of a so-called RC-circuit.

The telecommunication device as shown in figure 1 comprises an input 1 consisting of two wires 30 and 31, which are connected to a mouthpiece-switch 2 consisting of two switches, a first one for (dis)connecting wire 30 and a wire 32, and a second one for (dis)connecting wire 31 and a wire 33. Wires 32 and 33 are coupled to a telephone circuit 3 comprising a processor means 10, a display 11 and a keyboard 12. A control connection 34 for controlling mouthpiece-switch 2 and for indicating the position of mouthpiece-switch 2 is situated between mouthpiece-switch 2 and telephone circuit 3. Both wires 30 and 31 of input 1 are also coupled to wires 35 and 36 respectively, which are connected to a rectifier 4, for converting an ac-voltage into a dc-voltage. This dc-voltage is supplied to wires 41 (positive) and 42 (negative), which are situated between rectifier 4 and ringing generator 5. Both wires 41 and 42 are also coupled to wires 39 and 40 respectively. Wire 39 is coupled to a first side of resistor 20 and to an emitter of a pnp-transistor 22. A second side of resistor 20 is coupled to a base of transistor 22 and to a first side of a resistor 21, of which a second side is coupled to wire 40. A collector of transistor 22 is coupled to a first side of a capacitor 23 and a first side of a resistor 24 and to a wire 37. This wire 37 is coupled to a first side of a resistor 14. A second side of capacitor 23 and of resistor 24 are coupled to wire 40. A second side of resistor 14 is coupled to a first side of a Light Emitting Diode or LED 15, of which a second side is coupled to wire 38, which is coupled to wire 40.

Capacitor 23 and resistor 24 together form a so-called RC-circuit, which could be considered to be a supplyless memory. LED 15 forms, together with a transistor 13 coupled to processor 10, a so-called opto-coupler. The combination of RC-circuit 23,24 and opto-coupler 13,15 could be considered to be a one-bit memory. Rectifier 4, ringing generator 5 and resistors 20, 21 and 24 and capacitor 23 and transistor 22 could be considered to be a detector for detecting a ringing signal.

The telecommunication device according to the invention as disclosed in figure 1 functions as follows. A ringing signal arriving at input 1 and comprising for example a first signal (a ring) during a first time-interval (for example 1 sec.) and a second signal (a silence) during a second time-interval (for example 2 sec.) is blocked by mouthpiece-switch 2 due to said mouthpiece lying on said device and both switches therefore being in a non-conductive state. Said ringing signal is further supplied to rectifier 4, which rectifies it, as a consequence of which a dc-voltage (during a ring, and not during a silence) is supplied to ringing generator 5, which in response to that generates a sound (during a ring) or not (during a silence).

In case said mouthpiece is lifted during said silence, in known devices not comprising said supplyless memory, processor 10 does not know whether said mouthpiece is lifted to make an outgoing call or has been lifted to answer an incoming call. This problem is solved by the device according to the invention due to the presence of, inter alia, capacitor 23 and resistor 24. During said ring, said dc-voltage present between wires 41 and 42 is also present between wires 39 and 40. Resistors 20 and 21 together form a voltage divider which, during said ring, brings transistor 22 into a conductive state. As a consequence of this, capacitor 23 is charged quickly due to transistor 22 in said conductive state having a low impedance. Because of the series circuit of resistor 14 and LED 15 being situated in parallel to said capacitor 23, as soon as a certain threshold voltage has been reached, LED 15 will shine such that transistor 13 becomes conductive. During said silence following said ring, the dc-voltage will disappear, and transistor 22 will become non-conductive. Capacitor 23 will discharge via resistor 24 and the series circuit of resistor 14 and LED 15. In case the resistance value of resistor 24 is much smaller than the resistance value of said series circuit of resistor 14 and LED15, the so-called RC-time will be determined by said capacitor 23 and said resistor 24, and should be chosen in such a way, preferably, that it is longer than the duration of said silence. In that case, even when said mouthpiece is lifted during a silence of said ringing signal to answer an incoming call, processor 10 will be informed immediately via transistor 13 being in a conductive state in response to the memory signal stored via capacitor 23.

In the device according to the invention, as soon as the mouthpiece has been lifted, either for making an outpoing call, or for answering an incoming call either during a ring or during a silence, processor 10 immediately has got all information, which information could be used for certain display functions. In view of this, it should be observed that figure 1 only shows parts relevant for the invention, and that it does not show, for example, further connections between rectifier 4 and processor 10 for either feeding processor 10 during a ring of the ringing signal or informing processor 10 of the presence of such a ring, etc.

## Claims

1. Telecommunication device comprising
- an input (30, 31) for receiving a ringing signal,
- a detector (4, 5, 20, 21, 24, 23, 22) coupled to said input for detecting said ringing signal and comprising a rectifier (4) and a supplyless memory (23, 24) for storing a memory signal in response to said ringing signal for being able to distinguish between incoming calls and outgoing calls,
**characterised in that** said telecommunication device comprises
- a display (11) for displaying information with respect to said incoming calls as well as said outgoing calls,
and **in that** said detector comprises
- a switch (20, 21, 22) located between said rectifier and said supplyless memory.

2. Telecommunication device according to claim 1, **characterised in that** said ringing signal comprises a first signal during a first time-interval and a second signal during a second time-interval, said memory signal being generated during at least a part of said first time-interval, and at least a part of said memory signal remaining present during said second time-interval.

3. Telecommunication device according to claim 2, **characterised in that** said first signal corresponds with a ring and said second signal corresponds with a silence.

4. Telecommunication device according to claim 2 or 3, **characterised in that** said supplyless memory comprises a capacitor.

5. Telecommunication device according to claim 4, **characterised in that** said capacitor is charged during at least a part of said first time-interval in response to said first signal.

6. Telecommunication device according to claim 4 or 5, **characterised in that** said supplyless memory comprises a resistor which together with said capacitor forms a so-called RC-circuit.

7. Telecommunication device according to claim 6, **characterised in that** a so-called RC-time of said RC-circuit is equal to or larger than said second time-interval.

8. Telecommunication device according to claim 4, 5, 6, or 7, **characterised in that** said detector comprises a threshold circuit coupled to said capacitor for detecting said capacitor being charged more or less than a predefined threshold.

9. Telecommunication device according to any one of the preceding claims,
**characterised in that** said switch comprises a voltage divider (20, 22) and a transistor (22) coupled to said voltage divider.

## Patentansprüche

1. Telekommunikationsgerät, bestehend aus
- einem Eingang (30,31) zum Empfang eines Rufsignals,
- einem an den Eingang angeschlossenen Detektor (4,5,20,21,24,23,22) zur Erkennung des Rufsignals, der aus einem Gleichrichter (4) und einem Speicher ohne Stromversorgung (23,24) besteht, in dem ein Speichersignal als Reaktion auf das Rufsignal gespeichert wird, um zwischen eintreffenden Anrufen und abgehenden Rufen unterscheiden zu können,
**dadurch gekennzeichnet, dass** das Telekommunikationsgerät folgendes umfasst:
- eine Anzeige (11) zur Darstellung von Informationen bezüglich der eintreffenden Anrufe sowie der abgehenden Rufe,
und dadurch dass der Detektor folgendes umfasst:
- einen Schalter (20,21,22), der sich zwischen Gleichrichter und dem Speicher ohne Stromversorgung befindet.

2. Telekommunikationsgerät gemäß Anspruch 1, **dadurch gekennzeichnet, dass** das Rufsignal aus einem ersten Signal während eines ersten Zeitintervalls und einem zweiten Signal während eines zweiten Zeitintervalls besteht, wobei das Speichersignal während mindestens eines Teils des ersten Zeitintervalls erzeugt wird und mindestens ein Teil des Speichersignals während des zweiten Zeitintervalls vorhanden bleibt.

3. Telekommunikationsgerät gemäß Anspruch 2, **dadurch gekennzeichnet, dass** das erste Signal einem Rufton und das zweite Signal einer Pause entspricht.

4. Telekommunikationsgerät gemäß Anspruch 2 oder 3, **dadurch gekennzeichnet, dass** der Speicher ohne Stromversorgung aus einem Kondensator besteht.

5. Telekommunikationsgerät gemäß Anspruch 4, **dadurch gekennzeichnet, dass** der Kondensator als Reaktion auf das erste Signal während mindestens eines Teils des ersten Zeitintervalls aufgeladen wird.

6. Telekommunikationsgerät gemäß Anspruch 4 oder 5, **dadurch gekennzeichnet, dass** der Speicher ohne Stromversorgung einen Widerstand enthält, der zusammen mit dem Kondensator ein sogenanntes RC-Glied bildet.

7. Telekommunikationsgerät gemäß Anspruch 6, **dadurch gekennzeichnet, dass** eine sogenannte RC-Zeit des RC-Gliedes gleich dem oder größer als das zweite Zeitintervall ist.

8. Telekommunikationsgerät gemäß Anspruch 4, 5, 6 oder 7, **dadurch gekennzeichnet, dass** der Detektor einen Schwellwert-Schaltkreis umfasst, der an den Kondensator angeschlossen ist, um zu erkennen, ob der Kondensator mehr als eine vordefinierte Schwelle aufgeladen ist oder weniger.

9. Telekommunikationsgerät gemäß aller vorherigen Ansprüche, **dadurch gekennzeichnet, dass** der Schalter aus einem Spannungsteiler (20,21) und einem Transistor (22) besteht, der an den Spannungsteiler angeschlossen ist.

## Revendications

1. Dispositif de télécommunication comprenant :
- une entrée (30, 31) pour recevoir un signal de sonnerie,
- un détecteur (4, 5, 20, 21, 24, 23, 22) couplé à ladite entrée pour détecter ledit signal de sonnerie et comprenant un redresseur (4) et une mémoire sans apport d'énergie (23, 24) pour mémoriser un signal de mémoire en réponse audit signal de sonnerie afin d'être en mesure de faire la différence entre les appels entrants et les appels sortants,
**caractérisé en ce que** ledit dispositif de télécommunication comprend :
un affichage (11) pour afficher des informations concernant lesdits appels entrants ainsi que lesdits appels sortants,
et **en ce que** ledit détecteur comprend :
un commutateur (20, 21, 22) situé entre ledit redresseur et ladite mémoire sans apport d'énergie.

2. Dispositif de télécommunication selon la revendication 1, **caractérisé en ce que** ledit signal de sonnerie comprend un premier signal durant une première période et un second signal durant une seconde période, ledit signal de mémoire étant généré pendant au moins une partie de ladite première période, et au moins une partie dudit signal de mémoire restant présent pendant ladite seconde période.

3. Dispositif de télécommunication selon la revendication 2, **caractérisé en ce que** ledit premier signal correspond à une sonnerie et ledit second signal correspond à un silence.

4. Dispositif de télécommunication selon la revendication 2 ou 3, **caractérisé en ce que** ladite mémoire sans apport d'énergie comprend un condensateur.

5. Dispositif de télécommunication selon la revendication 4, **caractérisé en ce que** ledit condensateur est chargé pendant au moins une partie de ladite première période en réponse audit premier signal.

6. Dispositif de télécommunication selon la revendication 4 ou 5, **caractérisé en ce que** ladite mémoire sans apport d'énergie comprend une résistance qui forme avec ledit condensateur un circuit dénommé circuit RC.

7. Dispositif de télécommunication selon la revendication 6, **caractérisé en ce qu'**une période dite RC dudit circuit RC est supérieure ou égale à ladite seconde période.

8. Dispositif de télécommunication selon la revendication 4, 5, 6 ou 7, **caractérisé en ce que** ledit détecteur comprend un circuit de seuil couplé audit condensateur afin de détecter si ledit condensateur est chargé au-dessus ou en-dessous d'un seuil prédéterminé.

9. Dispositif de télécommunication selon l'une quelconque des revendications précédentes, **caractérisé en ce que** ledit commutateur comprend un diviseur de tension (20, 22) et un transistor (22) couplé audit diviseur de tension.
